# EUROPEAN PATENT SPECIFICATION

(11) **EP 2 493 238 B1**
(45) Date of publication and mention of the grant of the patent: **15.06.2016**
(21) Application number: 10831108.5
(22) Date of filing: 09.11.2010
(51) Int. Cl.: H04W 24/10, H04W 48/10, G01S 5/02, H04W 16/18, H04W 64/00, H04W 16/04, H04W 72/00

(54) **METHOD AND DEVICE FOR PATH LOSS ACQUISITION**
VERFAHREN UND VORRICHTUNG ZUR PFADVERLUSTERFASSUNG
PROCÉDÉ ET DISPOSITIF D'ACQUISITION D'AFFAIBLISSEMENT DE PROPAGATION

(30) Priority: 18.11.2009 CN 200910223383
(43) Date of publication of application: 29.08.2012
(73) Proprietor: Huawei Technologies Co., Ltd., Longgang District Shenzhen, Guangdong 518129 (CN)
(72) Inventor: ZHANG, Liwen, Shenzhen Guangdong 518129 (CN); YANG, Kaifeng, Shenzhen Guangdong 518129 (CN); CHU, Dongyu, Shenzhen Guangdong 518129 (CN)
(74) Representative: Thun, Clemens
(86) International application number: PCT/CN2010/078536
(87) International publication number: WO 2011/060693

(56) References cited:
- WO-A1-00/04739
- WO-A1-00/30388
- WO-A1-00/57658
- WO-A1-03/107702
- WO-A2-98/27763
- WO-A2-2007/024096
- CN-A- 1 344 473
- CN-A- 1 578 490
- CN-A- 101 145 827
- CN-A- 101 707 784
- GB-A- 2 292 655
- GB-A- 2 311 912
- US-A- 6 167 274
- US-A1- 2003 144 007

## Description

### FIELD OF THE INVENTION

The present invention relates to the field of network technologies, and in particular, to a technology for acquiring a path loss.

### BACKGROUND OF THE INVENTION

In an existing communication network, a network-side device needs to allocate different transmission channels to different terminals. A channel allocation based on interference (Channel Allocation Based on Interference, IBCA) method exists, that is, a channel satisfying a certain carrier to interference ratio (Carrier to Interference Ratio, CIR) condition is allocated to the terminal, where the carrier to interference ratio is a ratio between wanted signal strength added to an input port of a receiving antenna and interfering signal strength. In the IBCA method, accurate estimation of the CIR guarantees performance of the method, where the CIR is computed as a difference between effective signal strength (dBm) and interfering signal strength (dBm). The interfering signal strength is interfering strength of an interfering signal to a new access call, and the computing of the interfering strength requires a path loss from the new access call to a cell where the interfering signal is located. The interfering signal strength may be obtained by subtracting, from transmit power (dBm) of a base station, the path loss (dB) from the new access call to the cell where the interfering signal is located. Therefore, it can be seen that, the path loss is a prerequisite of the accurate estimation of the CIR, and the path loss refers to an amount of a loss introduced by a transmission environment between a transmitter and a receiver.

In the prior art, a path loss from a new access call to a neighboring cell may be acquired in the following manner: the path loss = transmit power of a BCCH carrier frequency of a designated cell - broadcast control channel (Broadcast Control Channel, BCCH) signal strength actually received by a terminal in a newly accessed cell.

However, when the terminal reports a common measurement report to the network-side device, it is specified in an existing protocol that only BCCH signal strength of six neighboring cells with strongest signal strength of current cells is reported. However, when the network-side device allocates channels to the terminal by using an IBCA algorithm, if a designated neighboring cell is not among the six neighboring cells, the measurement report of the terminal does not report BCCH signal strength of the designated neighboring cell, and the computing of a path loss of the designated neighboring cell cannot be obtained, thereby further affecting the estimation accuracy of the CIR and reducing performance of the IBCA algorithm. In addition, for the terminal, if the BCCH signal strength of a neighboring cell is not obtained, a path loss from a current location of the terminal to the neighboring cell cannot be obtained.

US 6,167,274 discloses a method for the detection of the geographic location of a mobile station within a mobile network. The mobile station detects signal characteristics for signals generated by neighboring cells to create a report of signal characteristics corresponding to the location at which the mobile station resides. This report is then compared against the database of signal signatures identifying geographic locations within the cell in which the mobile station is known to be positioned. This document does not discuss the problem of acquiring a path loss.

Further, WO 98/27763 A2 discloses a method where a cellular network's BA lists are modified so that mobile terminals in the network can measure downlink interference on predetermined BCCH frequencies. These measurements can be made in all cells where the mobile terminals are located and then reported back to the base station. The base station maps the reported measurements to corresponding cells, and uses the mapping to produce a cell-to-cell interdependency matrix. For the preferred embodiment, the matrix describes the difference in path loss between cells.

Further, GB 2 311 912 A discloses a wireless communication system which automatically adjusts its organisation parameters using a characterization of signal propagation in the system's coverage area. This characterization involves measuring path loss-related characteristics by the system's base stations and wireless terminals. The path loss-related characteristic may be the wireless terminals' received signal strengths (RSS), based on signals transmitted at known powers by a plurality of the system's base stations.

Finally, US 2003/0144007A1 refers to a method of determining a location of a mobile terminal comprising receiving, at a mobile terminal, respective signals from respective ones of at least three transmitters, whose respective locations and respective transmit power levels are known, the respective locations of the at least three transmitters being different from each other, measuring respective strengths of the received signals and determining the location of the mobile terminal based on the respective strengths of the received signals, the respective locations of the at least three transmitters, and the respective transmit power levels of the at least three transmitters.

### SUMMARY OF THE INVENTION

Embodiments of the present invention provide a method and a device for acquiring a path loss, so that a path loss from a current location of a terminal to a neighboring cell may be obtained even without BCCH signal strength of the neighboring cell.

An embodiment of the present invention provides a method for acquiring a path loss, including:
determining a current location of a terminal according to traffic channel signal strength of a current cell accessed by the terminal and broadcast control channel signal strength of at least one neighboring cell actually received by the terminal; or, determining the current location of the terminal according to broadcast control channel signal strength of at least two neighboring cells of the current cell accessed by the terminal; and
acquiring a path loss of a corresponding designated neighboring cell from pre-stored correspondence according to the determined current location of the terminal, wherein the acquiring the path loss of the corresponding designated neighboring cell from the pre-stored correspondence according to the determined current location of the terminal comprises:
   acquiring the path loss of the corresponding designated neighboring cell from pre-stored correspondence between locations of the terminal and path losses of cells according to the determined current location of the terminal, wherein
   the pre-stored correspondence between locations of the terminal and path losses of cells is established in the following manner:
   obtaining locations of the same signal strength by performing division according to traffic channel signal strength of any one cell and broadcast control channel signal strength of at least one neighboring cell of the any one cell, or according to broadcast control channel signal strength of at least two neighboring cells of the any one cell, wherein signal strength of a same cell received by the terminal at each location of the same signal strength is equal;
   acquiring a path loss from each location of the same signal strength of the any one cell to a neighboring cell according to broadcast control channel signal strength of the neighboring cell received at the each location of the same signal strength of the any one cell and transmit power of a base station where the neighboring cell is located; and
   establishing correspondence between the each location of the same signal strength of the any one cell and the path loss from the each location of the same signal strength of the any one cell to each neighboring cell or
   wherein the acquiring the path loss of the corresponding designated neighboring cell from the pre-stored correspondence according to the determined current location of the terminal comprises:
   acquiring broadcast control signal strength of the corresponding designated neighboring cell from pre-stored correspondence between locations of the terminal and broadcast control signal strength of cells according to the determined current location of the terminal;
   acquiring the path loss from the current location to the designated neighboring cell according to the broadcast control signal strength and transmit power of a base station where the neighboring cell is located, wherein
   the correspondence between locations of the terminal and broadcast control signal strength of cells is established in the following manners:
   obtaining locations of same signal strength of any one cell by performing division according to traffic channel signal strength of the any one cell and broadcast control channel signal strength of at least one neighboring cell of the any one cell, or broadcast control channel signal strength of at least two neighboring cells of the any one cell, wherein signal strength of a same cell received by the terminal at the locations of the same signal strength is equal; and
   acquiring the traffic channel signal strength of the current cell and the broadcast control channel signal strength of the designated neighboring cell according to the locations of the same signal strength, and establishing the correspondence between the locations of the same signal strength of the any one cell and the broadcast control channel signal strength from the locations of the same signal strength to each neighboring cell. An embodiment of the present invention provides a device for acquiring a path loss, including:
      a determining module, configured to determine a current location of a terminal according to traffic channel signal strength of a current cell accessed by the terminal and broadcast control channel signal strength of at least one neighboring cell actually received by the terminal; or, determine the current location of the terminal according to broadcast control channel signal strength of at least two neighboring cells of the current cell accessed by the terminal; and
      a matching acquisition module, configured to acquire a path loss of a corresponding designated neighboring cell from pre-stored correspondence according to the determined current location of the terminal, wherein the pre-stored correspondence is a correspondence between locations of the terminal and path losses of cells according to the determined current location of the terminal, and the pre-stored correspondence between locations of the terminal and path losses of cells is established in the following manner:

   obtaining locations of the same signal strength by performing division according to traffic channel signal strength of any one cell and broadcast control channel signal strength of at least one neighboring cell of the any one cell, or according to broadcast control channel signal strength of at least two neighboring cells of the any one cell, wherein signal strength of a same cell received by the terminal at each location of the same signal strength is equal;
   acquiring a path loss from each location of the same signal strength of the any one cell to a neighboring cell according to broadcast control channel signal strength of the neighboring cell received at the each location of the same signal strength of the any one cell and transmit power of a base station where the neighboring cell is located; and
   establishing correspondence between the each location of the same signal strength of the any one cell and the path loss from the each location of the same signal strength of the any one cell to each neighboring cell or
   wherein the pre-stored correspondence is a correspondence between locations of the terminal and broadcast control signal strength of cells according to the determined current location of the terminal, and the correspondence between locations of the terminal and broadcast control signal strength of cells is established in the following manners:
   obtaining locations of same signal strength of any one cell by performing division according to traffic channel signal strength of the any one cell and broadcast control channel signal strength of at least one neighboring cell of the any one cell, or broadcast control channel signal strength of at least two neighboring cells of the any one cell,
   wherein signal strength of a same cell received by the terminal at the locations of the same signal strength is equal; and
   acquiring the traffic channel signal strength of the current cell and the broadcast control channel signal strength of the designated neighboring cell according to the locations of the same signal strength, and establishing the correspondence between the locations of the same signal strength of the any one cell and the broadcast control channel signal strength from the locations of the same signal strength to each neighboring cell.

An embodiment of the present invention further provides a network-side device, which includes the device for acquiring a path loss in the foregoing embodiment.

An embodiment of the present invention further provides a terminal, which includes the device for acquiring a path loss in the foregoing embodiment.

In the embodiment of the present invention, the current location of the terminal is determined according to the TCH signal strength of the current cell accessed by the terminal and the BCCH signal strength of at least one neighboring cell actually received by the terminal, or determined according to the BCCH signal strength of at least two neighboring cells of the current cell. Further, the path loss of the corresponding designated neighboring cell may be acquired from the pre-stored correspondence according to the current location. Therefore, the path loss from the current location of the terminal to the designated neighboring cell may be acquired even without the BCCH signal strength of the designated neighboring cell.

### BRIEF DESCRIPTION OF THE DRAWINGS

To illustrate the technical solutions according to the embodiments of the present invention or in the prior art more clearly, the accompanying drawings required for describing the embodiments or the prior art are introduced below briefly. Apparently, the accompanying drawings in the following descriptions merely show some of the embodiments of the present invention, and persons of ordinary skill in the art can obtain other drawings according to the accompanying drawings without creative efforts.
FIG. 1 is a flow chart of a method for acquiring a path loss according to an embodiment of the present invention;
FIG. 2 is a flow chart of establishing correspondence between locations of a terminal and path losses according to an embodiment of the present invention;
FIG. 3 is a schematic diagram of an interface after locations of the same signal strength are obtained in a cell by performing division according to an embodiment of the present invention;
FIG. 4 is a schematic diagram of path losses from a location of the same signal strength in a cell to interfering neighboring cells G and H according to an embodiment of the present invention;
FIG. 5 is a flow chart of a method for acquiring a path loss according to another embodiment of the present invention;
FIG. 6 is a flow chart of establishing correspondence between locations of a terminal and broadcast control signal strength of cells according to the present invention;
FIG. 7 is a flow chart of a method for acquiring a path loss according to still another embodiment of the present invention;
FIG. 8 is a schematic structural diagram of a device for acquiring a path loss according to an embodiment of the present invention; and
FIG. 9 is a schematic structural diagram of a device for acquiring a path loss according to another embodiment of the present invention.

### DETAILED DESCRIPTION OF THE EMBODIMENTS

The technical solutions of the present invention are clearly described in the following with reference to the accompanying drawings. It is obvious that the embodiments to be described are only a part rather than all of the embodiments of the present invention. All other embodiments obtained by persons skilled in the art based on the embodiments of the present invention without creative effects shall fall within the protection scope of the present invention.

To make the objectives, features, and advantages of the present invention more comprehensible, the present invention is described in further detail in the following with reference to the specific embodiments and accompanying drawings.

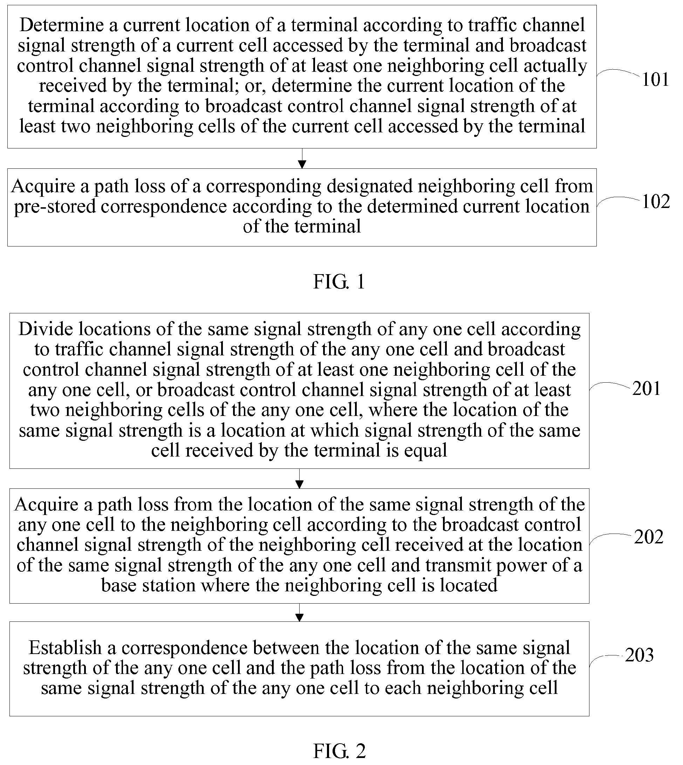

Referring to FIG. 1, an embodiment of the present invention provides a method for acquiring a path loss, which may include the following content.

101: Determine a current location of a terminal according to traffic channel signal strength of a current cell accessed by the terminal and broadcast control channel signal strength of at least one neighboring cell actually received by the terminal; or, determine the current location of the terminal according to broadcast control channel signal strength of at least two neighboring cells of the current cell accessed by the terminal.

Certainly, in an actual application, the current location of the terminal may be determined by a network-side device, and in such case, the network-side device may determine the current location of the terminal according to the traffic channel (Traffic CHannel, TCH) signal strength of the current cell accessed by the terminal and the broadcast control channel (Broadcast Control CHannel, BCCH) signal strength of at least one neighboring cell actually received by the terminal, or according to the BCCH signal strength of at least two neighboring cells of the currently accessed cell actually received by the terminal, where the mentioned strength is included in a measurement report reported by the terminal. It should be noted that, the terminal may also report signal strength to a network-side device in a manner of an enhanced measurement report, and the terminal supporting the enhanced measurement report may report signal strength of more neighboring cells. In addition, if the path loss acquisition is completed by the terminal, the TCH signal strength of the current cell accessed by the terminal and the BCCH signal strength of the neighboring cell may be directly obtained through measurement.

The terminal may determine the current location of the terminal, that is, the terminal determines the current location of the terminal according to the traffic channel (Traffic CHannel, TCH) signal strength of the current cell accessed by the terminal and the broadcast control channel (Broadcast Control CHannel, BCCH) signal strength of at least one neighboring cell actually received by the terminal, or determine according to the BCCH signal strength of at least two neighboring cells of the currently accessed cell actually received by the terminal.

The BCCH signal strength of at least one neighboring cell of the current cell actually received by the terminal may generally be the BCCH signal strength of 6 neighboring cells with the strongest signal, and the TCH signal strength may include uplink signal strength or downlink signal strength, and generally has 64 signal levels.

Specifically, the current location of the terminal may be determined in the following manner:
Locations of the same signal strength are obtained in each cell by performing division according to the TCH signal strength of the current cell and the BCCH signal strength of at least one neighboring cell or according to the BCCH signal strength of at least two neighboring cells. For example, at least two curves of locations of the same signal strength are obtained in the current cell accessed by the terminal, where the curves may be an arc or an arc ring, and an intersection location of the at least two curves is the determined current location of the terminal. That is, the current location of the terminal may be determined according to the signal strength of at least two cells that is measured or received by the terminal. In an actual application, the current location of the terminal may be determined according to the signal strength of three or more than three cells (a neighboring cell or a currently accessed cell) which is measured or received by the terminal, and an intersection area of the three or more than three cells is determined as the current location of the terminal. Certainly, when the number of cells for determining the current location of the terminal increases, the determined location is more precise.

102: Acquire a path loss of a corresponding designated neighboring cell from pre-stored correspondence according to the determined current location of the terminal.

The designated neighboring cell may be a neighboring cell of which the broadcast control channel signal strength is not received by the terminal in the measurement report, or may be any neighboring cell. The corresponding path loss is a path loss from the current location to a designated neighboring cell. In practice, the path loss of the corresponding designated neighboring cell may be acquired through pre-stored correspondence between locations of the terminal and path losses of cells, where the pre-stored correspondence may be correspondence between locations of the terminal and path losses of cells, correspondence between locations of the terminal and broadcast control signal strength of cells, and still may be other correspondence, as long as the path loss from the current location of the terminal to a designated neighboring cell may be acquired directly or indirectly through the correspondence. In the subsequent embodiments, the manner for establishing the correspondence is described in detail. The correspondence may be stored in a manner of a path loss database in practice, and the path loss database may be implemented in the form, such as a table or a matrix. The embodiment of the present invention does not limit the storage manner of the correspondence between the locations and the path losses. The correspondence between the locations and the path losses stored in the form of a table is taken as an example, where rows may represent different locations, columns may represent different designated neighboring cells, and specific values in the table represent corresponding path losses. Certainly, the storage manner of the correspondence is not limited, and other storage manners may be adopted, or the correspondence is established in advance each time the path loss is acquired.

It should be noted that, the current location of the terminal may change at any time, and therefore, path losses corresponding to different current locations are different, while different current locations and the path losses are one-to-one mapping. When the network-side device determines one current location, a path loss from the current location to a designated neighboring cell may be acquired from the correspondence between locations and path losses through matching. In this manner, even BCCH signal strength of a neighboring cell actually received by the terminal is not reported to the network-side device with the measurement report, a path loss from the current location of the terminal to the neighboring cell may be found in the preset correspondence.

In addition, in the embodiment of the present invention, the terminal may acquire a path loss of a designated neighboring cell according to the pre-stored correspondence, and report the path loss to the network-side device after acquiring the path loss; or the network-side device may acquire a path loss of a designated neighboring cell according to the pre-stored correspondence, and send the corresponding path loss to the terminal after acquiring the path loss.

In the embodiment of the present invention, the current location of the terminal may be determined through the TCH signal strength of the current cell accessed by the terminal and the BCCH signal strength of at least one neighboring cell actually received by the terminal, or the BCCH signal strength of least two neighboring cells of the currently accessed cell actually received by the terminal, and a path loss from the current location to any designated neighboring cell may be acquired according to the pre-stored correspondence. Even when BCCH signal strength of a neighboring cell is not obtained, the path loss from the current location of the terminal to the neighboring cell may be acquired. Further, the network-side device is capable of performing channel allocation more accurately and precisely, thereby improving performance of network channel transmission. In addition, the embodiment of the present invention may be applied to any wireless system, such as 2G, 3G and 4G.

The correspondence between locations of the terminal and path losses of cells may be established in multiple manners, which is described with an example in the following. Referring to FIG. 2, FIG. 2 is a manner for establishing correspondence between the locations of the terminal and the path losses of cells in an embodiment of the present invention, and the manner may include the following content.

201: Locations of the same signal strength of any one cell are obtained by performing division according to traffic channel signal strength of the any one cell and broadcast control channel signal strength of at least one neighboring cell of the any one cell, or broadcast control channel signal strength of at least two neighboring cells of the any one cell, where the locations of the same signal strength is location blocks at which signal strength of a same cell received by the terminal is equal.

In this step, multiple locations of the same signal strength may be obtained in the cell by performing division according to signal levels of a cell and at least one neighboring cell of the cell, or signal levels of at least two neighboring cells of the cell, where the signal strength of the same cell received by the terminal at the locations of the same signal strength is equal. The locations of the same signal strength need to be obtained only once in any fixed cell, but each cell requires division once, and a division result of this time may be used subsequently. It is unnecessary to divide all cells covered by the base station as a current cell in turn during the process of acquiring the path loss.

In the embodiment of the present invention, a cell group used for obtaining the locations of the same signal strength by performing division may be collectively referred to as a positioning neighboring cell group, where the positioning neighboring cell group may be one cell and a neighboring cell of the cell or two neighboring cells of the cell, or the cell and more than two neighboring cells of the cell. In an actual application, generally the current cell and any one neighboring cell of the cell are adopted as the positioning neighboring cell group. It should be noted that, at a location of the same signal strength, signal strength of the neighboring cells in the positioning neighboring cell group that can be received by the terminal are equal, and received signal strength of other neighboring cells is equal.

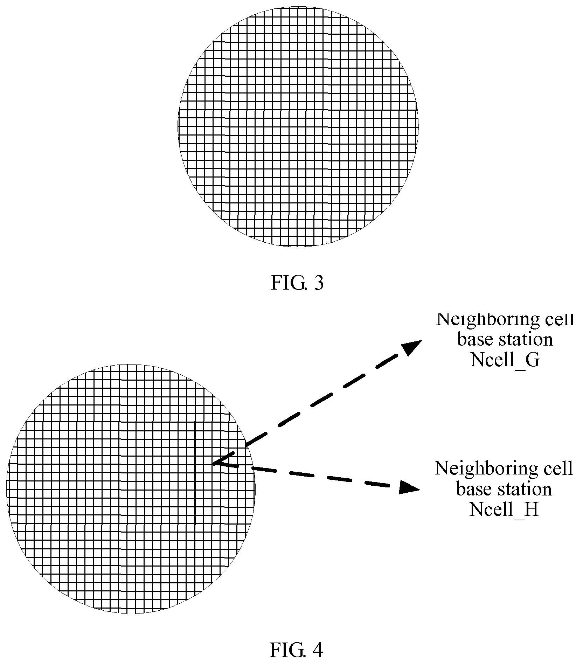

The signal levels of a cell may be 64 levels (0∼63) in general cases. In the embodiment of the present invention, locations of the same signal strength are obtained according to a positioning neighboring cell group including a cell and two neighboring cells of the cell, which is taken as an example for description. For example, for cell A, cell B and cell C, when cell A is divided, cell B and cell C are neighboring cells. A product of signal levels of cells A, B and C is the number of locations of the same signal strength that need to be obtained by performing division. A specific area of each location of the same signal strength is divided according to TCH signal strength of cell A and BCCH signal strength of cells B and C. Referring to FIG. 3, FIG. 3 is a schematic diagram of an interface after locations of the same signal strength are obtained by performing division in a cell. When required accuracy is not high, the signal levels of the cell may be divided into other levels, for example, 16 levels, and the corresponding number of the locations is 16 × 16 × 16.

It should be noted that, this step is the process of obtaining locations of the same signal strength by performing division. In an actual application, the locations of the same signal strength may be obtained by performing division at any time, as long as the locations of the same signal strength are preset. The locations of the same signal strength, similar to the correspondence between locations of the terminal and path losses, may be reused subsequently or updated according to actual conditions after being established once, for example, when the signal strength of the cell changes. Division or establishment does not need to be performed each time the path loss is computed. In this embodiment, for the convenience of description, a sequence of obtaining the locations of the same signal strength by performing division and establishing the correspondence is limited, but in an actual application, a sequence is not limited to the sequence of this embodiment.

202: Acquire a path loss from the location of the same signal strength of the any one cell to the neighboring cell according to the broadcast control channel signal strength of the neighboring cell received at the location of the same signal strength of the any one cell and transmit power of a base station where the neighboring cell is located.

The path loss is a difference between the transmit power of the base station where the designated neighboring cell is located and the BCCH signal strength of the neighboring cell actually received by the terminal. Therefore, the difference computed according to the transmit power of the base station where the designated neighboring cell (such as cell B) is located stored by the network-side device and the BCCH signal strength of the neighboring cell (cell B) actually received by the terminal is the path loss from the location of the same signal strength where the terminal is located to the designated neighboring cell. Referring to FIG. 4, FIG. 4 is a schematic diagram of path losses from a location of the same signal strength in a cell to interfering neighboring cells G and H in practice.

It should be noted that, filtering (such as sliding window filtering or averaging filtering) may be performed on the path loss obtained by computing, and the filtered path loss is stored. Filtering methods such as the sliding window filtering or the averaging filtering in the prior art, are not described herein again.

203: Establish correspondence between the locations of the same signal strength of the any one cell and the path losses from the location of the same signal strength of the any one cell to each neighboring cell.

In this step, correspondence between the path loss computed in 202 and the location of the same signal strength is established, and may be stored in a preset database (in the form of a table or a matrix), so that subsequently, when the terminal does not report BCCH signal strength of a neighboring cell but a corresponding path loss needs to be acquired, the path loss may be found in the established correspondence. The preset database stores specific directions of locations of the same signal strength, specific values of path losses, and the one-to-one mapping of the directions and values.

201 to 203 is the process of establishing the correspondence between locations of the terminal and path losses in advance. If, during the establishing process, BCCH signal of a neighboring cell is not obtained, the correspondence between locations of the same signal strength and path losses may be updated and established when the BCCH signal of the neighboring cell is obtained subsequently.

It should be noted that, the correspondence may be established by the terminal or the network-side device, and may be stored in the terminal or stored in the network-side device, as long as the network-side device or the terminal is capable of finding a path loss of a neighboring cell according to the correspondence when the path loss of the neighboring cell needs to be obtained.

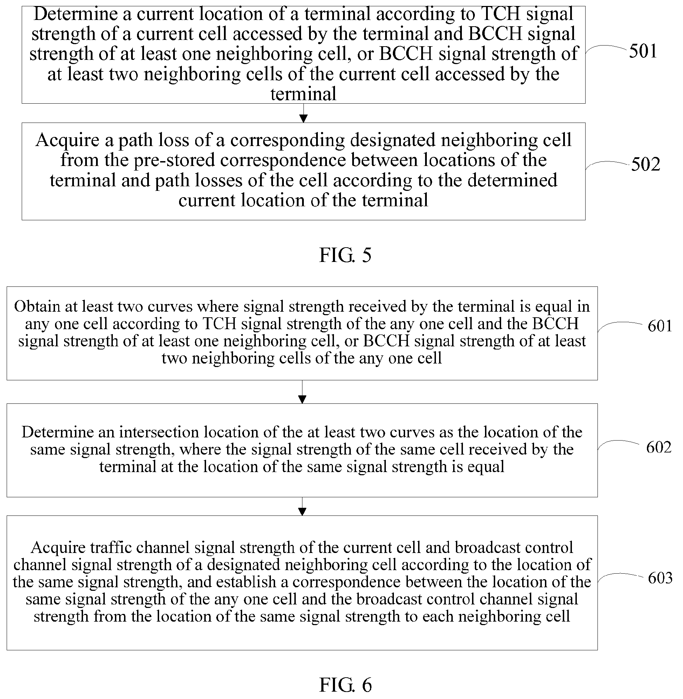

Further, in a method provided by another embodiment of the present invention, a path loss may be acquired according to pre-stored correspondence between locations of the terminal and path losses of cells. As shown in FIG. 5, the method may include the following content:
501: Determine a current location of a terminal according to TCH signal strength of a current cell accessed by the terminal and BCCH signal strength of at least one neighboring cell, or BCCH signal strength of at least two neighboring cells of the current cell accessed by the terminal.
   In this embodiment, it is assumed that TCH signal strength of cell A, and BCCH signal strength of cell B and cell C are acquired. In this manner, the current location of the terminal may be determined according to the TCH signal strength of cell A and the BCCH signal strength of cell B and/or the cell C; and the current location of the terminal may also be determined according to the BCCH signal strength of cell B and cell C. For the specific manner of determining the current location of the terminal, reference may be made to related description of the foregoing embodiment, which is not described herein again.
502: Acquire a path loss of a corresponding designated neighboring cell from the pre-stored correspondence between locations of the terminal and path losses of cells according to the determined current location of the terminal.

After the current location of the terminal in cell A is determined, a location of the same signal strength where the terminal is located is acquired through searching the pre-stored correspondence, and the path loss of the corresponding designated neighboring cell may further be obtained.

It should be noted that, in an actual application, persons skilled in the art may know that, the correspondence between the current locations of the terminal and the path losses may be reused subsequently or updated according to actual conditions after being established once.

In addition, correspondence between locations of the terminal and broadcast control signal strength of cells may be established in a manner similar to the descriptions in 201 to 203. As shown in FIG. 6, the manner may include the following content:
601: Obtain at least two curves where signal strength received by the terminal is equal in any one cell according to TCH signal strength of the any one cell and BCCH signal strength of at least one neighboring cell, or BCCH signal strength of at least two neighboring cells of the any one cell.
   In this embodiment, when locations of the same signal strength of the current cell are obtained by performing division, first, at least two curves where the signal strength received by the terminal is equal are obtained in the any one cell. The curve may include an arc or an arc ring. For the specific description, reference may be made to a division manner when the correspondence is established in the previous embodiment.
602: Determine an intersection location of the at least two curves as a location of the same signal strength, where signal strength of the same cell received by the terminal at the location of the same signal strength is equal.
603: Acquire traffic channel signal strength of the current cell and broadcast control channel signal strength of a designated neighboring cell according to the location of the same signal strength, and establish correspondence between the location of the same signal strength of the any one cell and the broadcast control channel signal strength from the location of the same signal strength to each neighboring cell.

It should be noted that, during the process of establishing the correspondence, filtering (such as sliding window filtering or averaging filtering) may also be performed on the BCCH signal strength of the designated neighboring cell, and the filtered signal strength is stored. Filtering methods such as the sliding window filtering or the averaging filtering are not described herein again. In this embodiment, the established correspondence is the correspondence between the locations of the same signal strength obtained by performing division and the broadcast control channel signal strength of neighboring cells, and when the current location of the terminal is determined subsequently, a corresponding location of the same signal strength and corresponding broadcast control channel signal strength of the neighboring cell may be acquired through matching, thereby computing the path loss from the current location of the terminal to the neighboring cell.

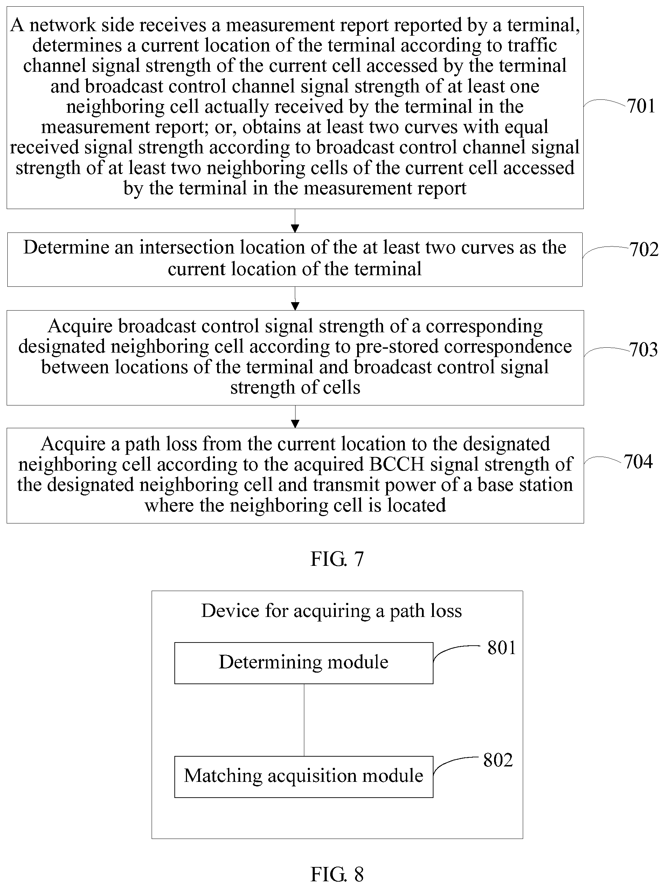

Further, in a method provided by another embodiment of the present invention, a path loss may be acquired according to pre-stored correspondence between locations of the terminal and path losses of cells. In this embodiment, a network-side device executes the method, which is taken as an example for description. As shown in FIG. 7, the method may include the following content:
701: A network-side device receives a measurement report reported by a terminal, determines a current location of the terminal according to traffic channel signal strength of the current cell accessed by the terminal and broadcast control channel signal strength of at least one neighboring cell actually received by the terminal in the measurement report; or, obtains at least two curves with equal received signal strength according to broadcast control channel signal strength of at least two neighboring cells of the current cell accessed by the terminal in the measurement report.
702: Determine an intersection location of the at least two curves as the current location of the terminal.
703: Acquire broadcast control signal strength of a corresponding designated neighboring cell according to correspondence between locations of the terminal and broadcast control signal strength of cells.
   According to the current location of the terminal, the BCCH signal strength of the designated neighboring cell may be acquired through searching the correspondence between locations of the terminal and broadcast control signal strength of cells, where the designated neighboring cell may be any neighboring cell that requires computing of the path loss.
704: Acquire a path loss from the current location to the designated neighboring cell according to the acquired BCCH signal strength of the designated neighboring cell and transmit power of a base station where the neighboring cell is located.

The path loss=a difference between the transmit power of the base station where the designated neighboring cell is located and the BCCH signal strength of the neighboring cell actually received by the terminal. In this embodiment, the difference between the transmit power of the base station where the designated neighboring cell is located and the BCCH signal strength of the interfering neighboring cell is computed, which is the path loss from the current location to the designated neighboring cell.

In this embodiment, the correspondence is between the location of the same signal strength in the cell and the BCCH signal strength of the corresponding designated neighboring cell. When acquiring the BCCH signal strength from the correspondence, the network-side device computes the path loss, thereby obtaining the pass loss of the designated neighboring cell. Further, through the method of this embodiment, when the network-side device performs an IBCA algorithm subsequently, the estimation of the CIR is more accurate and precise, thereby further improving performance of a network transmission channel.

It should be noted that, as for the foregoing method embodiments, to make a brief description, the methods are described as a series of action combinations. However, persons of ordinary skill in the art should know that, the present invention is not limited by the described action sequence, as according to the present invention, some steps may be performed in other sequences or performed simultaneously.

Referring to FIG. 8, an embodiment of the present invention further provides a device for acquiring a path loss, and the device may include the following modules.

The device may be integrated at a network-side device end, directly implemented by the network-side device, and may further be an independent entity connected to the network-side device. In addition, the device may also be disposed in the terminal.

A determining module 801 is configured to determine a current location of a terminal according to traffic channel signal strength of a current cell accessed by the terminal and broadcast control channel signal strength of at least one neighboring cell actually received by the terminal; or, determine the current location of the terminal according to the broadcast control channel signal strength of at least two neighboring cells of the current cell accessed by the terminal.

Specifically, for the manner of determining the location of the terminal by the determining module 801, reference may be made to related description in the foregoing method embodiments, which is not described herein again.

A matching acquisition module 802 is configured to acquire a path loss of a corresponding designated neighboring cell from pre-stored correspondence according to the current location of the terminal determined by the determining module 801.

The pre-stored correspondence may be correspondence between locations of the terminal and path losses of cells, correspondence between locations of the terminal and broadcast control signal strength of cells, and still may be other correspondence, as long as the path loss from the current location of the terminal to a designated neighboring cell may be acquired directly or indirectly through the correspondence.

It should be noted that, because the current location of the terminal may change at any time, path losses corresponding to different current locations are different, and the different current locations and path losses are in one-to-one mapping. When a current location is determined, a path loss from the current location to an interfering neighboring cell may be acquired from the pre-stored correspondence through matching. Even BCCH signal strength of an interfering neighboring cell is not obtained, the path loss from the current location of the terminal to the interfering neighboring cell may be found from the correspondence between current locations of the terminal and path losses. Further, the network-side device is capable of performing channel allocation based on IBCA more accurately and precisely, thereby improving performance of the network channel transmission.

Specifically, for the manner of acquiring the path loss to the corresponding designated neighboring cell by the matching acquisition module 802, reference may be made to the corresponding description in the foregoing method embodiments, which is not described herein again. For the establishing manner of the pre-stored correspondence, which may be correspondence between locations of the terminal and path losses of cells or correspondence between locations of the terminal and broadcast control signal strength of cells, reference may be made to the corresponding description in the method embodiment, and similar manners may be adopted for the establishment of other correspondence.

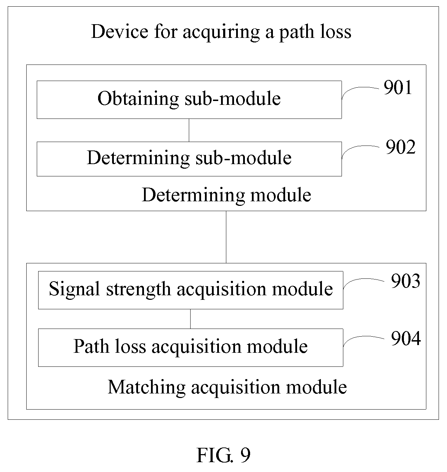

Referring to FIG. 9, FIG. 9 is a schematic structural diagram of an embodiment of a device for acquiring a path loss according to another embodiment of the present invention, and in this embodiment, the determining module 801 may specifically include:
an obtaining sub-module 901, configured to obtain at least two curves with equal received signal strength according to traffic channel signal strength of a current cell accessed by a terminal and broadcast control channel signal strength of at least one neighboring cell actually received by the terminal, or broadcast control channel signal strength of at least two neighboring cells of the current cell accessed by the terminal; and
a determining sub-module 902, configured to determine an intersection location of the at least two curves as a current location of the terminal.

In addition, when pre-stored correspondence is correspondence between locations of the terminal and path losses of cells, the matching acquisition module 802 may be specifically configured to acquire the path loss of the corresponding designated neighboring cell from the pre-stored correspondence between locations of the terminal and path losses of cells according to the determined current location of the terminal.

Alternatively, when the pre-stored correspondence is the correspondence between locations of the terminal and broadcast control signal strength of cells, the matching acquisition module 802 may specifically include:
a signal strength acquisition module 903, configured to acquire broadcast control signal strength of a corresponding designated neighboring cell according to the correspondence between locations of the terminal and broadcast control signal strength of cells; and
a path loss acquisition module 904, configured to acquire a path loss from the current location to the designated neighboring cell according to transmit power of a base station where the neighboring cell is located and the broadcast control signal strength acquired by the signal strength acquisition module 903.

The path loss is equal to a difference between the transmit power of the base station where the designated neighboring cell is located and the BCCH signal strength of the neighboring cell actually received by the terminal. In this embodiment, a difference between the transmit power of the base station where the interfering neighboring cell is located and the BCCH signal strength of the interfering neighboring cell is computed, which is the path loss from the current location to the interfering neighboring cell.

With the device of the embodiment of the present invention, the path loss from the current location to any designated neighboring cell may be acquired according to the pre-stored correspondence. Even when the BCCH signal strength of a neighboring cell is not obtained, the path loss from the current location of the terminal to the neighboring cell may still be acquired. Further, the network-side device is capable of performing channel allocation more accurately and precisely, thereby improving performance of the network channel transmission.

An embodiment of the present invention further provides a network-side device, where the network-side device may include the device for acquiring a path loss provided by the foregoing embodiment of the present invention. For the device for acquiring a path loss, reference may be made to the foregoing embodiment, which is not described herein again.

An embodiment of the present invention further provides a terminal, where the terminal may include the device for acquiring a path loss provided by the foregoing embodiments of the present invention. For the device for acquiring a path loss, reference may be made to the foregoing embodiment, which is not described herein again.

It should be noted that, in this specification, relationship terms such as first and second are merely used to distinguish an entity or operation from another entity or operation, but do not require or imply any actual relationship or sequence between these entities or operations. The term "include", "contain" or any other variations are intended to cover non-exclusive inclusion, so that the process, method, object or device including a series of elements not only include those elements, but also include other elements not explicitly listed, or further include inherent elements of the process, method, object, or device. Without further limitations, an element defined by a phrase "including one..." does not exclude other same elements in the process, method, object or device including the element.

In combination with the embodiments herein, steps of the method or algorithm described in the disclosed embodiments may be directly implemented by using hardware, a software module executed by a processor, or a combination thereof. The software module may be placed in a random access memory (RAM), a memory, a read-only memory (ROM), an electrically programmable ROM, an electrically erasable programmable ROM, a register, a hard disk, a removable magnetic disk, a CD-ROM, or any storage medium of other forms well-known in the technical field.

The method and the device for acquiring a path loss provided in the embodiments of the present invention are described in detail above. The principle and implementation of the present invention are described herein through specific examples. The description about the embodiments of the present invention is merely provided to help understand the method and core ideas of the present invention. In addition, persons of ordinary skill in the art can make variations and modifications to the present invention in terms of the specific implementations and application scopes according to the ideas of the present invention. Therefore, the specification shall not be construed as a limit to the present invention.

## Claims

1. A method for acquiring a path loss, comprising:
determining (101) a current location of a terminal according to traffic channel signal strength of a current cell accessed by the terminal and broadcast control channel signal strength of at least one neighboring cell actually received by the terminal; or, determining the current location of the terminal according to broadcast control channel signal strength of at least two neighboring cells of the current cell accessed by the terminal; and
acquiring (102) a path loss of a corresponding designated neighboring cell from pre-stored correspondence according to the determined current location of the terminal, wherein the acquiring (102) the path loss of the corresponding designated neighboring cell from the pre-stored correspondence according to the determined current location of the terminal comprises:
acquiring the path loss of the corresponding designated neighboring cell from pre-stored correspondence between locations of the terminal and path losses of cells according to the determined current location of the terminal, wherein
the pre-stored correspondence between locations of the terminal and path losses of cells is established in the following manner:
obtaining (201) locations of the same signal strength by performing division according to traffic channel signal strength of any one cell and broadcast control channel signal strength of at least one neighboring cell of the any one cell, or according to broadcast control channel signal strength of at least two neighboring cells of the any one cell, wherein signal strength of a same cell received by the terminal at each location of the same signal strength is equal;
acquiring (202) a path loss from each location of the same signal strength of the any one cell to a neighboring cell according to broadcast control channel signal strength of the neighboring cell received at the each location of the same signal strength of the any one cell and transmit power of a base station where the neighboring cell is located; and
establishing (203) correspondence between the each location of the same signal strength of the any one cell and the path loss from the each location of the same signal strength of the any one cell to each neighboring cell
or
wherein the acquiring (102) the path loss of the corresponding designated neighboring cell from the pre-stored correspondence according to the determined current location of the terminal comprises:
acquiring (703) broadcast control signal strength of the corresponding designated neighboring cell from pre-stored correspondence between locations of the terminal and broadcast control signal strength of cells according to the determined current location of the terminal;
acquiring (704) the path loss from the current location to the designated neighboring cell according to the broadcast control signal strength and transmit power of a base station where the neighboring cell is located, wherein
the correspondence between locations of the terminal and broadcast control signal strength of cells is established in the following manners:
obtaining (601) locations of same signal strength of any one cell by performing division according to traffic channel signal strength of the any one cell and broadcast control channel signal strength of at least one neighboring cell of the any one cell, or broadcast control channel signal strength of at least two neighboring cells of the any one cell, wherein signal strength of a same cell received by the terminal at the locations of the same signal strength is equal; and
acquiring (603) the traffic channel signal strength of the current cell and the broadcast control channel signal strength of the designated neighboring cell according to the locations of the same signal strength, and establishing the correspondence between the locations of the same signal strength of the any one cell and the broadcast control channel signal strength from the locations of the same signal strength to each neighboring cell.

2. The method according to claim 1, wherein the acquiring the path loss from the each location of the same signal strength of the any one cell to the neighboring cell comprises:
performing sliding window filtering or averaging filtering on the path loss from the each location of the same signal strength of the any one cell to the neighboring cell, and using the filtered path loss as the path loss from the location of the same signal strength to the neighboring cell.

3. The method according to claim 1 or 2, wherein the correspondence between the location of the same signal strength of the any one cell and the path loss from the location of the same signal strength of the any one cell to each neighboring cell is represented in a manner of a matrix or a table.

4. The method according to claim 1, wherein the determining the current location of the terminal comprises:
obtaining (601) at least two curves with equal received signal strength according to the traffic channel signal strength of the current cell accessed by the terminal and the broadcast control channel signal strength of at least one neighboring cell actually received by the terminal, or the broadcast control channel signal strength of at least two neighboring cells of the current cell accessed by the terminal; and
determining (602) an intersection location of the at least two curves as the current location of the terminal.

5. The method according to any one of claims 1 to 4, wherein the designated neighboring cell is a neighboring cell broadcast control channel signal strength of which is not received by the terminal.

6. A device for acquiring a path loss, comprising:
a determining module (801), configured to determine a current location of a terminal according to traffic channel signal strength of a current cell accessed by the terminal and broadcast control channel signal strength of at least one neighboring cell actually received by the terminal; or, determine the current location of the terminal according to broadcast control channel signal strength of at least two neighboring cells of the current cell accessed by the terminal; and
a matching acquisition module (802), configured to acquire a path loss of a corresponding designated neighboring cell from pre-stored correspondence according to the determined current location of the terminal, wherein the pre-stored correspondence is a correspondence between locations of the terminal and path losses of cells according to the determined current location of the terminal, and the pre-stored correspondence between locations of the terminal and path losses of cells is established in the following manner:
obtaining locations of the same signal strength by performing division according to traffic channel signal strength of any one cell and broadcast control channel signal strength of at least one neighboring cell of the any one cell, or according to broadcast control channel signal strength of at least two neighboring cells of the any one cell, wherein signal strength of a same cell received by the terminal at each location of the same signal strength is equal;
acquiring a path loss from each location of the same signal strength of the any one cell to a neighboring cell according to broadcast control channel signal strength of the neighboring cell received at the each location of the same signal strength of the any one cell and transmit power of a base station where the neighboring cell is located; and
establishing correspondence between the each location of the same signal strength of the any one cell and the path loss from the each location of the same signal strength of the any one cell to each neighboring cell
or
wherein the pre-stored correspondence is a correspondence between locations of the terminal and broadcast control signal strength of cells according to the determined current location of the terminal, and the correspondence between locations of the terminal and broadcast control signal strength of cells is established in the following manners:
obtaining locations of same signal strength of any one cell by performing division according to traffic channel signal strength of the any one cell and broadcast control channel signal strength of at least one neighboring cell of the any one cell, or broadcast control channel signal strength of at least two neighboring cells of the any one cell, wherein signal strength of a same cell received by the terminal at the locations of the same signal strength is equal; and
acquiring the traffic channel signal strength of the current cell and the broadcast control channel signal strength of the designated neighboring cell according to the locations of the same signal strength, and establishing the correspondence between the locations of the same signal strength of the any one cell and the broadcast control channel signal strength from the locations of the same signal strength to each neighboring cell.

7. The device according to claim 6, wherein the determining module (801) comprises:
an obtaining sub-module (901), configured to obtain at least two curves with equal received signal strength according to the traffic channel signal strength of the current cell accessed by the terminal and the broadcast control channel signal strength of at least one neighboring cell actually received by the terminal, or the broadcast control channel signal strength of at least two neighboring cells of the current cell accessed by the terminal; and
a determining sub-module (902), configured to determine an intersection location of the at least two curves as the current location of the terminal.

8. The device according to claim 6, wherein the matching acquisition module (802) acquires the path loss of the corresponding designated neighboring cell from the pre-stored correspondence between locations of the terminal and path losses of cells according to the determined current location of the terminal.

9. The device according to claim 6, wherein the matching acquisition module (802) comprises:
a signal strength acquisition module (903), configured to acquire broadcast control signal strength of the corresponding designated neighboring cell according to correspondence between locations of the terminal and broadcast control signal strength of cells; and
a path loss acquisition module (904), configured to acquire the path loss from the current location to the designated neighboring cell according to transmit power of a base station where the neighboring cell is located and the broadcast control signal strength acquired by the signal strength acquisition module.

10. A network-side device, **characterized by** comprising the device for acquiring a path loss according to any one of claims 6 to 9.

11. A terminal, **characterized by** comprising the device for acquiring a path loss according to any one of claims 6 to 9.

## Patentansprüche

1. Verfahren zum Erfassen eines Pfadverlusts, das die folgenden Schritte umfasst:
Feststellen (101) eines gegenwärtigen Ortes eines Endgeräts entsprechend der Verkehrskanal-Signalstärke einer gegenwärtigen Zelle, auf die durch das Endgerät zugegriffen wird, und der Broadcaststeuerkanal-Signalstärke von mindestens einer Nachbarzelle, die tatsächlich durch das Endgerät empfangen wird; oder Feststellen des gegenwärtigen Ortes des Endgeräts entsprechend der Broadcaststeuerkanal-Signalstärke von mindestens zwei Nachbarzellen der gegenwärtigen Zelle, auf die durch das Endgerät zugegriffen wird; und
Erfassen (102) eines Pfadverlust einer entsprechenden spezifizierten Nachbarzelle aus einer vorgespeicherten Entsprechung entsprechend dem festgestellten gegenwärtigen Ort des Endgeräts, wobei das Erfassen (102) des Pfadverlusts der entsprechenden spezifizierten Nachbarzelle aus der vorgespeicherten Entsprechung entsprechend dem festgestellten gegenwärtigen Ort des Endgeräts aufweist:
Erfassen des Pfadverlusts der entsprechenden spezifizierten Nachbarzelle aus einer vorgespeicherten Entsprechung zwischen Orten des Endgeräts und Pfadverlusten von Zellen entsprechend dem festgestellten gegenwärtigen Ort des Endgeräts, wobei die vorgespeicherte Entsprechung zwischen Orten des Endgeräts und Pfadverlusten von Zellen in der folgenden Weise hergestellt wird:
Beschaffen (201) von Orten derselben Signalstärke durch Durchführen einer Division entsprechend der Verkehrskanal-Signalstärke irgendeiner Zelle und der Broadcaststeuerkanal-Signalstärke von mindestens einer Nachbarzelle der irgendeinen Zelle, oder entsprechend der Broadcaststeuerkanal-Signalstärke von mindestens zwei Nachbarzellen der irgendeinen Zelle, wobei die Signalstärke einer selben Zelle, die durch das Endgerät an jedem Ort derselben Signalstärke empfangen wird, gleich ist;
Erfassen (202) eines Pfadverlusts von jedem Ort derselben Signalstärke der irgendeinen Zelle zu einer Nachbarzelle entsprechend der Broadcaststeuerkanal-Signalstärke der Nachbarzelle, die an jedem Ort derselben Signalstärke der irgendeinen Zelle empfangen wird, und einer Sendeleistung einer Basisstation, wo sich die Nachbarzelle befindet; und
Herstellen (203) einer Entsprechung zwischen dem jeden Ort derselben Signalstärke der irgendeinen Zelle und dem Pfadverlust von dem jeden Ort derselben Signalstärke der irgendeinen Zelle zu jeder Nachbarzelle;
oder
wobei das Erfassen (102) des Pfadverlusts der entsprechenden spezifizierten Nachbarzelle aus der vorgespeicherten Entsprechung entsprechend dem festgestellten gegenwärtigen Ort des Endgeräts aufweist:
Erfassen (703) einer Broadcaststeuer-Signalstärke der entsprechenden spezifizierten Nachbarzelle aus einer vorgespeicherten Entsprechung zwischen Orten des Endgeräts und einer Broadcaststeuer-Signalstärke von Zellen entsprechend dem festgestellten gegenwärtigen Ort des Endgeräts;
Erfassen (704) des Pfadverlusts vom gegenwärtigen Ort zur spezifizierten Nachbarzelle entsprechend der Broadcaststeuer-Signalstärke und der Sendeleistung einer Basisstation, wo sich die Nachbarzelle befindet, wobei
die Entsprechung zwischen Orten des Endgeräts und der Broadcaststeuer-Signalstärke von Zellen in der folgenden Weise hergestellt wird:
Beschaffen (601) von Orten derselben Signalstärke irgendeiner Zelle durch Durchführen einer Division entsprechend der Verkehrskanal-Signalstärke der irgendeinen Zelle und der Broadcaststeuerkanal-Signalstärke von mindestens einer Nachbarzelle der irgendeinen Zelle, oder der Broadcaststeuerkanal-Signalstärke von mindestens zwei Nachbarzellen der irgendeinen Zelle, wobei die Signalstärke einer selben Zelle, die durch das Endgerät an den Orten derselben Signalstärke empfangen wird, gleich ist; und
Erfassen (603) der Verkehrskanal-Signalstärke der gegenwärtigen Zelle und der Broadcaststeuerkanal-Signalstärke der spezifizierten Nachbarzelle entsprechend den Orten derselben Signalstärke, und Herstellen der Entsprechung zwischen den Orten derselben Signalstärke der irgendeinen Zelle und der Broadcaststeuerkanal-Signalstärke von den Orten derselben Signalstärke zu jeder Nachbarzelle.

2. Verfahren nach Anspruch 1, wobei das Erfassen des Pfadverlusts von dem jeden Ort derselben Signalstärke der irgendeinen Zelle zur Nachbarzelle aufweist:
Durchführen einer Filterung mit einem gleitenden Fenster oder mittelwertbildenden Filterung am Pfadverlust von dem jeden Ort derselben Signalstärke der irgendeinen Zelle zur Nachbarzelle, und Verwenden des gefilterten Pfadverlusts als den Pfadverlust vom Ort derselben Signalstärke zur Nachbarzelle.

3. Verfahren nach Anspruch 1 oder 2, wobei die Entsprechung zwischen dem Ort derselben Signalstärke der irgendeinen Zelle und dem Pfadverlust vom Ort derselben Signalstärke der irgendeinen Zelle zu jeder Nachbarzelle in einer Weise einer Matrix oder einer Tabelle repräsentiert wird.

4. Verfahren nach Anspruch 1, wobei das Feststellen des gegenwärtigen Ortes des Endgeräts aufweist:
Beschaffen (601) von mindestens zwei Kurven mit gleicher empfangener Signalstärke entsprechend der Verkehrskanal-Signalstärke der gegenwärtigen Zelle, auf die durch das Endgerät zugegriffen wird, und der Broadcaststeuerkanal-Signalstärke von mindestens einer Nachbarzelle, die tatsächlich durch das Endgerät empfangen wird, oder der Broadcaststeuerkanal-Signalstärke von mindestens zwei Nachbarzellen der gegenwärtigen Zelle, auf die durch das Endgerät zugegriffen wird; und
Feststellen (602) eines Schnittpunkts der mindestens zwei Kurven als den gegenwärtigen Ort des Endgeräts.

5. Verfahren nach einem der Ansprüche 1 bis 4, wobei die spezifizierte Nachbarzelle eine Nachbarzelle ist, deren Broadcaststeuerkanal-Signalstärke nicht durch das Endgerät empfangen wird.

6. Vorrichtung zur Erfassung eines Pfadverlusts, die Folgendes umfasst:
ein Feststellungsmodul (801), das konfiguriert ist, einen gegenwärtigen Ort eines Endgeräts entsprechend der Verkehrskanal-Signalstärke einer gegenwärtigen Zelle, auf die durch das Endgerät zugegriffen wird, und der Broadcaststeuerkanal-Signalstärke von mindestens einer Nachbarzelle festzustellen, die tatsächlich durch das Endgerät empfangen wird; oder den gegenwärtigen Ort des Endgeräts entsprechend der Broadcaststeuerkanal-Signalstärke von mindestens zwei Nachbarzellen der gegenwärtigen Zelle festzustellen, auf die durch das Endgerät zugegriffen wird; und
ein Anpassungserfassungsmodul (802), das konfiguriert ist, einen Pfadverlust einer entsprechenden spezifizierten Nachbarzelle aus einer vorgespeicherten Entsprechung entsprechend dem festgestellten gegenwärtigen Ort des Endgeräts zu erfassen, wobei die vorgespeicherte Entsprechung eine Entsprechung zwischen Orten des Endgeräts und Pfadverlusten von Zellen entsprechend dem festgestellten gegenwärtigen Ort des Endgeräts ist, und die vorgespeicherte Entsprechung zwischen Orten des Endgeräts und Pfadverlusten von Zellen in der folgenden Weise hergestellt wird:
Beschaffen von Orten derselben Signalstärke durch Durchführen einer Division entsprechend der Verkehrskanal-Signalstärke irgendeiner Zelle und der Broadcaststeuerkanal-Signalstärke von mindestens einer Nachbarzelle der irgendeinen Zelle, oder entsprechend der Broadcaststeuerkanal-Signalstärke von mindestens zwei Nachbarzellen der irgendeinen Zelle, wobei die Signalstärke einer selben Zelle, die durch das Endgerät an jedem Ort derselben Signalstärke empfangen wird, gleich ist;
Erfassen eines Pfadverlusts von jedem Ort derselben Signalstärke der irgendeinen Zelle zu einer Nachbarzelle entsprechend der Broadcaststeuerkanal-Signalstärke der Nachbarzelle, die an jedem Ort derselben Signalstärke der irgendeinen Zelle empfangen wird, und der Sendeleistung einer Basisstation, wo sich die Nachbarzelle befindet; und
Herstellen einer Entsprechung zwischen dem jeden Ort derselben Signalstärke der irgendeinen Zelle und dem Pfadverlust von dem jeden Ort derselben Signalstärke der irgendeinen Zelle zu jeder Nachbarzelle;
oder
wobei die vorgespeicherte Entsprechung eine Entsprechung zwischen Orten des Endgeräts und einer Broadcaststeuer-Signalstärke von Zellen entsprechend dem festgestellten gegenwärtigen Ort des Endgeräts ist, und die Entsprechung zwischen Orten des Endgeräts und Broadcaststeuer-Signalstärke von Zellen in der folgenden Weise hergestellt wird:
Beschaffen von Orten derselben Signalstärke irgendeiner Zelle durch Durchführen einer Division entsprechend der Verkehrskanal-Signalstärke der irgendeinen Zelle und der Broadcaststeuerkanal-Signalstärke von mindestens einer Nachbarzelle der irgendeinen Zelle, oder der Broadcaststeuerkanal-Signalstärke von mindestens zwei Nachbarzellen der irgendeinen Zelle, wobei die Signalstärke einer selben Zelle, die durch das Endgerät an den Orten derselben Signalstärke empfangen wird, gleich ist; und
Erfassen der Verkehrskanal-Signalstärke der gegenwärtigen Zelle und der Broadcaststeuerkanal-Signalstärke der spezifizierten Nachbarzelle entsprechend den Orten derselben Signalstärke, und Herstellen der Entsprechung zwischen den Orten derselben Signalstärke der irgendeinen Zelle und der Broadcaststeuerkanal-Signalstärke von dem Orten derselben Signalstärke zu jeder Nachbarzelle.

7. Vorrichtung nach Anspruch 6, wobei das Feststellungsmodul (801) aufweist:
ein Beschaffungssubmodul (901), das konfiguriert ist, mindestens zwei Kurven mit gleicher empfangener Signalstärke entsprechend der Verkehrskanal-Signalstärke der gegenwärtigen Zelle, auf die durch das Endgerät zugegriffen wird, und der Broadcaststeuerkanal-Signalstärke von mindestens einer Nachbarzelle, die tatsächlich durch das Endgerät empfangen wird, oder der Broadcaststeuerkanal-Signalstärke von mindestens zwei Nachbarzellen der gegenwärtigen Zelle zu beschaffen, auf die durch das Endgerät zugegriffen wird; und
ein Feststellungssubmodul (902), das konfiguriert ist, einen Schnittpunkt der mindestens zwei Kurven als den gegenwärtigen Ort des Endgeräts festzustellen.

8. Vorrichtung nach Anspruch 6, wobei das Anpassungserfassungsmodul (802) den Pfadverlust der entsprechenden spezifizierten Nachbarzelle aus der vorgespeicherten Entsprechung zwischen Orten des Endgeräts und Pfadverlusten von Zellen entsprechend dem festgestellten gegenwärtigen Ort des Endgeräts erfasst.

9. Vorrichtung nach Anspruch 6, wobei das Anpassungserfassungsmodul (802) aufweist:
ein Signalstärkeerfassungsmodul (903), das konfiguriert ist, die Broadcaststeuer-Signalstärke der entsprechenden spezifizierten Nachbarzelle entsprechend einer Entsprechung zwischen Orten des Endgeräts und Broadcaststeuer-Signalstärke von Zellen zu erfassen; und
ein Pfadverlusterfassungsmodul (904), das konfiguriert ist, den Pfadverlust vom gegenwärtigen Ort zur spezifizierten Nachbarzelle entsprechend der Sendeleistung einer Basisstation, wo sich die Nachbarzelle befindet, und der Broadcaststeuer-Signalstärke zu erfassen, die durch das Signalstärkeerfassungsmodul erfasst wird.

10. Netzwerkseitige Vorrichtung, die **dadurch gekennzeichnet ist, dass** sie die Vorrichtung zum Erfassen eines Pfadverlusts nach einem der Ansprüche 6 bis 9 aufweist.

11. Endgerät, das **dadurch gekennzeichnet ist, dass** es die Vorrichtung zum Erfassen eines Pfadverlusts nach einem der Ansprüche 6 bis 9 aufweist.

## Revendications

1. Procédé permettant d'acquérir un affaiblissement de propagation, comprenant les étapes suivantes :
déterminer (101) un emplacement courant d'un terminal selon une intensité de signal de canal de trafic d'une cellule courante accédée par le terminal et une intensité de signal de canal de contrôle de diffusion d'au moins une cellule voisine réellement reçue par le terminal ; ou, déterminer l'emplacement courant du terminal selon une intensité de signal de canal de contrôle de diffusion d'au moins deux cellules voisines de la cellule courante accédée par le terminal ; et
acquérir (102) un affaiblissement de propagation d'une cellule voisine désignée correspondante à partir d'une correspondance pré-stockée selon l'emplacement courant déterminé du terminal, l'étape consistant à acquérir (102) l'affaiblissement de propagation de la cellule voisine désignée correspondante à partir de la correspondance pré-stockée selon l'emplacement courant déterminé du terminal comprenant :
acquérir l'affaiblissement de propagation de la cellule voisine désignée correspondante à partir d'une correspondance pré-stockée entre des emplacements du terminal et des affaiblissements de propagation de cellules selon l'emplacement courant déterminé du terminal,
la correspondance pré-stockée entre des emplacements du terminal et des affaiblissements de propagation de cellules étant établie de la manière suivante :
obtenir (201) des emplacements de la même intensité de signal en exécutant une division selon une intensité de signal de canal de trafic d'une cellule quelconque et une intensité de signal de canal de contrôle de diffusion d'au moins une cellule voisine de la cellule quelconque, ou selon une intensité de signal de canal de contrôle de diffusion d'au moins deux cellules voisines de la cellule quelconque, une intensité de signal d'une même cellule reçue par le terminal à chaque emplacement de la même intensité de signal étant égale ;
acquérir (202) un affaiblissement de propagation depuis chaque emplacement de la même intensité de signal de la cellule quelconque jusqu'à une cellule voisine selon une intensité de signal de canal de contrôle de diffusion de la cellule voisine reçue au dit chaque emplacement de la même intensité de signal de la cellule quelconque et une puissance de transmission d'une station de base dans laquelle la cellule voisine est située ; et
établir (203) une correspondance entre ledit chaque emplacement de la même intensité de signal de la cellule quelconque et l'affaiblissement de propagation depuis ledit chaque emplacement de la même intensité de signal de la cellule quelconque jusqu'à chaque cellule voisine
ou
l'étape consistant à acquérir (102) l'affaiblissement de propagation de la cellule voisine désignée correspondante à partir de la correspondance pré-stockée selon l'emplacement courant déterminé du terminal comprenant :
acquérir (703) une intensité de signal de contrôle de diffusion de la cellule voisine désignée correspondante à partir d'une correspondance pré-stockée entre des emplacements du terminal et une intensité de signal de contrôle de diffusion de cellules selon l'emplacement courant déterminé du terminal ;
acquérir (704) l'affaiblissement de propagation depuis l'emplacement courant jusqu'à la cellule voisine désignée selon l'intensité de signal de contrôle de diffusion et une puissance de transmission d'une station de base dans laquelle la cellule voisine est située,
la correspondance entre des emplacements du terminal et une intensité de signal de contrôle de diffusion de cellules étant établie selon les manières suivantes :
obtenir (601) des emplacements de la même intensité de signal d'une cellule quelconque en exécutant une division selon une intensité de signal de canal de trafic de la cellule quelconque et une intensité de signal de canal de contrôle de diffusion d'au moins une cellule voisine de la cellule quelconque , ou une intensité de signal de canal de contrôle de diffusion d'au moins deux cellules voisines de la cellule quelconque, une intensité de signal d'une même cellule reçue par le terminal aux emplacements de la même intensité de signal étant égale ; et
acquérir (603) l'intensité de signal de canal de trafic de la cellule courante et l'intensité de signal de canal de contrôle de diffusion de la cellule voisine désignée selon les emplacements de la même intensité de signal, et établir la correspondance entre les emplacements de la même intensité de signal de la cellule quelconque et l'intensité de signal de canal de contrôle de diffusion depuis les emplacements de la même intensité de signal jusqu'à chaque cellule voisine.

2. Procédé selon la revendication 1, dans lequel l'étape consistant à acquérir l'affaiblissement de propagation depuis ledit chaque emplacement de la même intensité de signal de la cellule quelconque jusqu'à la cellule voisine comprend :
exécuter un filtrage de fenêtre dynamique ou un filtrage de moyenne sur l'affaiblissement de propagation depuis ledit chaque emplacement de la même intensité de signal de la cellule quelconque jusqu'à la cellule voisine, et utiliser l'affaiblissement de propagation filtré comme l'affaiblissement de propagation depuis l'emplacement de la même intensité de signal jusqu'à la cellule voisine.

3. Procédé selon la revendication 1 ou 2, dans lequel la correspondance entre l'emplacement de la même intensité de signal de la cellule quelconque et l'affaiblissement de propagation depuis l'emplacement de la même intensité de signal de la cellule quelconque jusqu'à chaque cellule voisine est représentée avec une matrice ou un tableau.

4. Procédé selon la revendication 1, dans lequel l'étape consistant à déterminer l'emplacement courant du terminal comprend :
obtenir (601) au moins deux courbes avec une intensité de signal reçu égale selon l'intensité de signal de canal de trafic de la cellule courante accédée par le terminal et l'intensité de signal de canal de contrôle de diffusion d'au moins une cellule voisine réellement reçue par le terminal, ou l'intensité de signal de canal de contrôle de diffusion d'au moins deux cellules voisines de la cellule courante accédée par le terminal ; et
déterminer (602) un emplacement d'intersection desdites deux courbes comme l'emplacement courant du terminal.

5. Procédé selon l'une quelconque des revendications 1 à 4, dans lequel la cellule voisine désignée est une cellule voisine dont l'intensité de signal de canal de contrôle de diffusion n'est pas reçue par le terminal.

6. Dispositif permettant d'acquérir un affaiblissement de propagation, comprenant :
un module de détermination (801), configuré pour déterminer un emplacement courant d'un terminal selon une intensité de signal de canal de trafic d'une cellule courante accédée par le terminal et une intensité de signal de canal de contrôle de diffusion d'au moins une cellule voisine réellement reçue par le terminal ; ou, déterminer l'emplacement courant du terminal selon une intensité de signal de canal de contrôle de diffusion d'au moins deux cellules voisines de la cellule courante accédée par le terminal ; et
un module d'acquisition d'appariement (802), configuré pour acquérir un affaiblissement de propagation d'une cellule voisine désignée correspondante à partir d'une correspondance pré-stockée selon l'emplacement courant déterminé du terminal, la correspondance pré-stockée étant une correspondance entre des emplacements du terminal et des affaiblissements de propagation de cellules selon l'emplacement courant déterminé du terminal, et la correspondance pré-stockée entre des emplacements du terminal et des affaiblissements de propagation de cellules étant établie de la manière suivante :
obtenir des emplacements de la même intensité de signal en exécutant une division selon une intensité de signal de canal de trafic d'une cellule quelconque et une intensité de signal de canal de contrôle de diffusion d'au moins une cellule voisine de la cellule quelconque, ou selon une intensité de signal de canal de contrôle de diffusion d'au moins deux cellules voisines de la cellule quelconque, une intensité de signal d'une même cellule reçue par le terminal à chaque emplacement de la même intensité de signal étant égale ;
acquérir un affaiblissement de propagation depuis chaque emplacement de la même intensité de signal de la cellule quelconque jusqu'à une cellule voisine selon une intensité de signal de canal de contrôle de diffusion de la cellule voisine reçue au dit chaque emplacement de la même intensité de signal de la cellule quelconque et une puissance de transmission d'une station de base dans laquelle la cellule voisine est située ; et
établir une correspondance entre ledit chaque emplacement de la même intensité de signal de la cellule quelconque et l'affaiblissement de propagation depuis ledit chaque emplacement de la même intensité de signal de la cellule quelconque jusqu'à chaque cellule voisine
ou
la correspondance pré-stockée étant une correspondance entre des emplacements du terminal et une intensité de signal de contrôle de diffusion de cellules selon l'emplacement courant déterminé du terminal, et la correspondance entre des emplacements du terminal et une intensité de signal de contrôle de diffusion de cellules étant établie selon les manières suivantes :
obtenir des emplacements de la même intensité de signal d'une cellule quelconque en exécutant une division selon une intensité de signal de canal de trafic de la cellule quelconque et une intensité de signal de canal de contrôle de diffusion d'au moins une cellule voisine de la cellule quelconque, ou une intensité de signal de canal de contrôle de diffusion d'au moins deux cellules voisines de la cellule quelconque, une intensité de signal d'une même cellule reçue par le terminal aux emplacements de la même intensité de signal étant égale ; et
acquérir l'intensité de signal de canal de trafic de la cellule courante et l'intensité de signal de canal de contrôle de diffusion de la cellule voisine désignée selon les emplacements de la même intensité de signal, et établir la correspondance entre les emplacements de la même intensité de signal de la cellule quelconque et l'intensité de signal de canal de contrôle de diffusion depuis les emplacements de la même intensité de signal jusqu'à chaque cellule voisine.

7. Dispositif selon la revendication 6, dans lequel le module de détermination (801) comprend :
un sous-module d'obtention (901), configuré pour obtenir au moins deux courbes avec une intensité de signal reçu égale selon l'intensité de signal de canal de trafic de la cellule courante accédée par le terminal et l'intensité de signal de canal de contrôle de diffusion d'au moins une cellule voisine réellement reçue par le terminal, ou l'intensité de signal de canal de contrôle de diffusion d'au moins deux cellules voisines de la cellule courante accédée par le terminal ; et
un sous-module de détermination (902), configuré pour déterminer un emplacement d'intersection desdites deux courbes comme l'emplacement courant du terminal.

8. Dispositif selon la revendication 6, dans lequel le module d'acquisition d'appariement (802) acquiert l'affaiblissement de propagation de la cellule voisine désignée correspondante à partir de la correspondance pré-stockée entre des emplacements du terminal et des affaiblissements de propagation de cellules selon l'emplacement courant déterminé du terminal.

9. Dispositif selon la revendication 6, dans lequel le module d'acquisition d'appariement (802) comprend :
un module d'acquisition d'intensité de signal (903), configuré pour acquérir une intensité de signal de contrôle de diffusion de la cellule voisine désignée correspondante selon une correspondance entre des emplacements du terminal et une intensité de signal de contrôle de diffusion de cellules ; et
un module d'acquisition d'affaiblissement de propagation (904), configuré pour acquérir l'affaiblissement de propagation depuis l'emplacement courant jusqu'à la cellule voisine désignée selon une puissance de transmission d'une station de base dans laquelle la cellule voisine est située et l'intensité de signal de contrôle de diffusion acquise par le module d'acquisition d'intensité de signal.

10. Dispositif côté réseau, **caractérisé en ce qu'**il comprend le dispositif permettant d'acquérir un affaiblissement de propagation selon l'une quelconque des revendications 6 à 9.

11. Terminal, **caractérisé en ce qu'**il comprend le dispositif permettant d'acquérir un affaiblissement de propagation selon l'une quelconque des revendications 6 à 9.
